# EUROPEAN PATENT APPLICATION

(11) **EP 0 615 143 A1**
(43) Date of publication of application: **14.09.1994**
(21) Application number: 93103812.9
(22) Date of filing: 10.03.1993
(51) Int. Cl.: G02B 5/22

(54) **Safelight filters for infrared-sensitive photographic elements**

(71) Applicant: MINNESOTA MINING AND MANUFACTURING COMPANY, St. Paul, Minnesota 55133-3427 (US)
(72) Inventor: Williner, Mario, I-17016 Ferrania (Savona) (IT)
(74) Representative: Allaix, Roberto

(57) **Abstract**

A safelight filter for infrared-sensitive silver halide photographic elements, said safelight filter comprising in superimposition a dye filter layer which absorbs visible light up to a wavelength of about 470 nm, a dye filter layer which absorbs visible light and infrared radiation over the wavelength range of from about 530 to about 850 nm and a flexible, transparent reflective sheet material having on one surface thereof a transparent metal coating which reduces transmission of near infrared radiation.

The safelight filter effectively reduce transmission in the visible portion of the spectrum (from about 380 to 760 nm) and the near infrared radiation (from about 760 to 1500 nm) and transmits light only in the wavelength range of from about 470 to about 530 nm, thus providing sufficient visible light for darkroom working combined with minimum photographic effects on the sensitive silver halide photographic element.

## Description

### FIELD OF THE INVENTION

This invention relates to photographic safelight filters and more particularly to photographic safelight filters suitable for use in the handling and processing of infrared-sensitive photographic elements in conjunction with safelight lamps.

### BACKGROUND OF THE INVENTION

It is well known that silver halide photographic elements can be spectrally sensitized to infrared radiation. See Mees and James, **The Theory of Photographic Processes**, 3rd edition, The MacMillan Company, 1966, pages 198 and 199. Silver halides are intrinsically sensitive only to light in the blue region of the spectrum. Therefore, when silver halides are to be exposed to other wavelengths of radiation, such as green light, red light or infrared radiation, a spectral sensitizing dye is required to render silver halides sensitive to such radiation. As known in the art, silver halides having adsorbed on the grains spectral sensitizing dyes are made sensitive to radiation of a wavelength other than the intrinsic blue sensitivity. There are numerous references to dye structures for infrared sensitizing dyes. Examples of patents describing such dyes are listed in US Pat. No. 4,011,083.

With the advent of lasers, and in particular solid state laser diodes emitting in the infrared region of the spectrum (e.g., 750 to 1500 nm), the interest in infrared sensitive materials has greatly increased. Many different processes and articles useful for exposure to laser diodes have been proposed. These include C.A.T. (Computer Assisted Tomography) scanners, graphic arts products and infrared sensitive false color-sensitized photographic elements as described in US Pat. No. 4,619,892. In this patent, photographic elements are described which are capable of providing full color images without exposure to corresponding visible radiation. These false address elements comprise at least three silver halide emulsion layers on a substrate, each associated with different photographic color image forming materials and sensitized to three different portions of the spectrum, with at least two layers sensitized to different regions of the infrared region of the spectrum.

For convenience in the handling and processing of infrared sensitive photographic elements, it is desirable to use a safelight source which emits light so there is sufficient visible light for handling and processing, yet cause a minimum level of fogging due to safelight lighting. However, the light emitted by the readily available safelight lamps used as light sources consists of a continuous spectrum and accordingly must be used in combination with suitable light filters. Conventionally, safelight filters for panchromatic photosensitive materials have been used for such infrared-sensitive elements. Said safelight filters, however, allow traces of the visible spectrum (dark red) to be partially transmitted, and also allows a large quantity of infrared radiation to be transmitted to cause fogging. It has been proposed, see for example GB 462,249, to produce infrared filters by combining known dye filters, which absorb the ultra-violet and the visible portions of the spectrum up to bright red, with dye filters including penta-, hepta-, nona- and undeca-carbocyanine dyes. Said dyes, however, are not satisfactory in practical use due to their low light- and heat-resistance. It has been also proposed to combine known dye filters, which absorb the ultra-violet and the visible portions of the spectrum up to bright red, with heat radiation shields including a glass having dispersed therein inorganic compounds, e.g., FeO, which absorb in the near infrared region of from 800 to 2000 nm. Said glasses, however, strongly absorb light not only in the infrared region but also in the visible region to cause reduction in the inside illumination. The glasses also lack the flexibility required to wrap up safelight lamps and cause a higher cost for the resulting safelight filter. A photographic safelight filter for handling and processing of silver halide color materials, which transmits light in the wavelength range of from about 570 to about 595 nm wherein the materials possess a pronounced minimum of photographic sensitivity, is described in GB 750,731.

### SUMMARY OF THE INVENTION

The present invention provides a safelight filter for infrared-sensitive silver halide photographic elements, said safelight filter comprising in superimposition a dye filter layer which absorbs visible light up to a wavelength of about 470 nm, a dye filter layer which absorbs visible light and infrared radiation over the wavelength range of from about 530 to about 850 nm and a flexible, transparent reflective sheet material having on one surface thereof a visible light transparent metal coating which reduces transmission of near infrared radiation.

The safelight filter effectively reduce transmission in the visible portion of the spectrum (from about 380 to 760 nm) and the near infrared radiation (from about 760 to 1500 nm) and transmits light only in the wavelength range of from about 470 to about 530 nm, thus providing sufficient visible light for darkroom working combined with minimum photographic effects on the sensitive silver halide photographic element.

### DETAILED DESCRIPTION OF THE INVENTION

The dye filter layer absorbing visible light up to a wavelength of about 470 nm for use in the composite safelight filter of the present invention is comprised of suitable dyes incorporated in colloid layers coated onto transparent supports. Said dye filter comprises yellow dyes having absorption maxima in the blue region of the visible spectrum. Examples of yellow dyes having absorption maxima in the blue region include those having commercial names Thioflavine, Pyramine yellow, Aurophenine, Metanil yellow, Brilliant yellow, Methylene yellow, Acridine yellow, Curcumine, Oxyphenine, Kiton yellow, Mikado yellow, Auramine, Naphthol yellow, Chrysoidine and Tartrazine.

The dye filter absorbing visible light and infrared radiation over the wavelength range of from about 530 to about 850 nm for use in the composite safety filter of the present invention is comprised of green, blue and red-violet dyes in combination incorporated in colloid layers coated onto transparent supports. Examples of red-violet dyes include those having commercial names Acid violet, Gentian violet, Flexonil violet and Filter blau-grun. Examples of green dyes include those having commercial names Naphthol green, Diamond green, Methyl green, Light green, Acid green and Lumiere green. Examples of blue dyes include those having commercial names Patent blue, Methylen blue, Eosin bluish, Victoria blue and Alkali blue.

The dye filters may be made of any hydrophilic colloid known in the art. Gelatin is the preferred hydrophilic colloid for use in the present invention. However, other water-soluble colloidal substances or mixtures thereof can also be used. Exemplary hydrophilic colloidal substances include gelatin derivatives, such as phthalated gelatin and acetylated gelatin, cellulose derivatives, such as carboxymethyl cellulose, hydroxymethylcellulose, and cellulose sulfate, starch, casein, zein, synthetic hydrophilic colloids such as polyvinyl alcohol, polyvinyl pyrrolidone, copolymers of acrylic acid esters, acrylonitrile and acrylamides, etc. The amount of hydrophilic binder and the dyes used in practice depends upon the thickness and optical density required. The thickness of each dye filter is advantageously used in the range of from 10 to 50 micrometers, preferably 20 to 40 micrometers, and the optical dye density is advantageously at least 3, preferably at least 4. The hydrophilic colloid layers of the dye filters are hardened with organic or inorganic hardening agents as known in the art. As hardening agents, use can be made of chromates (e.g., chrome alum), aldehydes (e.g., formaldehyde, and glutaraldehyde), N-methylol compounds (e.g., dimethylol urea, and methyloldimethylidantoin), dioxane derivatives (e.g., 2,3-dihydroxydioxane), active vinyl compounds (e.g.,1,3,5-triacryloyl-hexahydro-s-triazine, bis (vinylsulfonyl)methylether), active halogen compounds (e.g., 2,4-dichloro-6-hydroxy-s-triazine), mucohalogenic acids (e.g., mucochloric acid), isoxazoles, dialdehyde starch, and 2-chloro-6-hydroxy-triazinylated gelatin, used alone or in combination. The hydrophilic colloid layers of the dye filters of the present invention may also contain surface active agents which serve as coating assistant, as known in the art.

The hydrophilic colloid compositions for forming the dye filters of the present invention can be coated onto several transparent supports by adopting various methods known in the art, such as dip coating, airknife coating, curtain coating, extrusion coating, and the like. Examples of transparent supports include films of a poly-alfa-olefin (such as polyethylene, polystyrene, etc.), cellulose esters (such as cellulose triacetate, etc.), polyester (such as polyethyleneterephthalate), glass, and the like.

The transparent sheet material having on one surface thereof a thin, transparent reflective metal coating which reduces transmission of near infrared radiation for use in the composite safelight filter of the present invention comprises essentially a flexible base sheet substantially transparent to wavelengths of visible light, a vapor-deposited visibly-transparent infrared-reflective metal coating on the base sheet and an ultra thin visibly-transparent continuous resin film coating over the vapor-deposited metal film.

Polyethylene terephthalate film is especially useful as light-trasmissive flexible base sheet, suitably in thicknesses ranging from about 0.01 to about 0.25 mm, preferably from about 0.05 to about 0.2 mm. This material is preferred because of its clarity, uniformity, toughness, strength, and dimensional stability in widely varying humidity and temperature. Instead of employing polyethylene terephthalate, base sheets of other substantially transparent and flexible substrate materials can be employed, such as polyvinyl chloride, cellulose acetate, cellulose acetate-propionate, polystyrene, and polybutyl acrylate. The stability of these films may be improved by known techniques, e.g., by incorporating ultraviolet ray absorbers in the film itself.

Suitable metals for vapor deposition include aluminium, zinc, copper, silver and gold. The preferred metal for vapor deposition is aluminium. The infrared reflective metal layer is coated upon the transparent base sheet by any suitable vapor deposition technique such as, for example, described in US Pat. No. 2.703.772. The thickness of the metal coating, which is effective in reducing the transmission of infrared radiation is in the range of from 100 to 2000 Angstrom. For most efficient light transmission with infrared absorption, thickness between about 200 and 1000 Angstrom is preferred.

Generally, a transparent water-insoluble protective coating is applied over the metal coating to prevent corrosion of the thin metal layer. The protective layer should be at least thick enough to minimize annoying interference patterns, e.g., on the order of 1000 Angstrom or more, the upper limit being determined by clarity, economy, and convenience. Application of this protective layer is conveniently accomplished by using a rotogravure coating roll and a highly dilute solution (e.g., up to about 10% solids by weight, preferably no more than about 3% solids) of a film-forming water-insoluble organic resin in an organic solvent.

Transparent sheet materials having on one surface thereof a transparent thin metal coating, which are particularly effective in reducing the transmission of infrared radiation for use in the composite safelight filter of the present invention, are available on the market under the trade name of Scotchtint™ Window Films manufactured by Minnesota Mining and Manufacturing Company. Said films are used as transparent and reflective coverings for glass surfaces, such as windows, to act as heat-reflecting light-transmitting flexible inserts having a relatively high transmission in the visible spectrum and a lower transmission in the near infrared radiation.

The safelight filter of the present invention allows transmission of green light in the range from about 470 to about 530 nm, such that there is obtained sufficient visual light during handling and processing of infrared sensitive silver halide photographic elements having a minimum photographic effect on these elements. The infrared sensitive photographic elements frequently possess a photographic sensitivity in the blue, red and infrared wavelength regions, with pronounced minima or gaps of photographic sensitivity in the green region. Visual light used during handling and processing can conveniently correspond with these minima or gaps of photographic sensitivity. The safelight filter of the present invention allows transmission of light in the very narrow spectral range where the infrared sensitive photographic elements have a pronounced minimum of photographic sensitivity, which provides sufficient visual light for handling and processing work. The safelight filter of the present invention can be used for handling and processing photographic elements including silver halide emulsions spectrally sensitized to radiation in the infrared from 700 nm upwards, especially from 750 to 850 nm, used for exposure with a number of commercially available laser diodes.

The safelight filter of the present invention find particularly utility when used with photographic elements that include more than one infrared-sensitive silver halide layer. Preferred examples of said photographic elements are those comprising at least three silver halide emulsion layers on a substrate, each associated with different photographic color image forming materials such as color couplers capable of forming dyes of different colors upon reaction with an oxidised color photographic developer, diffusing dyes, bleachable dyes or oxidizable leuco dyes, the three emulsion layers being sensitized to three different portions of the visible spectrum with at least one, preferably at least two, layer sensitized to radiation within the infrared region of the spectrum.

Infrared sensitive silver halide color photographic elements for use in the present invention are preferably those described in US Pat. No. 4,619,892, which is incorporated herein by reference. More preferably, the infrared sensitive silver halide color photographic elements for use with the safelight filter of the present invention are those having all of the silver halide emulsion layers sensitized to different infrared regions of the electromagnetic spectrum. The order of these layers respect to the support, the difference in emulsion sensitivity among the layers and the sensitivity, contrast and D-max of each layer are preferably those described in said US Pat. No. 4,619,892.

Any of the various types of photographic silver halide emulsions may be used in the the infrared sensitive photographic elements. Silver chloride, silver bromide, silver iodobromide, silver chlorobromide, silver chloroiodobromide, and mixture thereof may be used, for example, dispersed in a hydrophilic colloid or carrier. Any configuration of grains, cubic, orthorombic, hexagonal, epitaxial, or tabular (high aspect ratio) grains may be used. The colloid may be partially hardened or fully hardened by any of the variously known photographic hardeners. Such hardeners are free aldehydes, aldehyde releasing compounds, triazines and diazines, aziridines, vinylsulfones, carbodiimides, and the like may be used, as described, for example, in US Pat. Nos. 3,232,764, 2,870,013, 3,819,608, 3,325,287, 3,992,366, 3,271,175 and 3,490,911.

The silver halide photographic elements can be used to form dye images therein through the selective formation of dyes. The photographic elements described above for forming silver images can be used to form dye images by employing developers containing dye image formers, such as color couplers, as described, for example, in US Pat. Nos. 3,111,864, 3,002,836, 2,271,238, 2,236,598, 2,950,970, 2,592,243, 2,343,703, 2,376,380, 2,369,489, 2,899,306, 3,152,896, 2,115,394, 2,252,718, 2,108,602, and 3,547,650. In this form the developer contains a color developing agent (e.g., a primary aromatic amine which in its oxidized form is capable of reacting with the coupler to form the image dye). Also, instant self-developing diffusion transfer film can be used as well as photothermographic color film or paper using silver halide in catalytic proximity to reducible silver sources and leuco dyes.

The dye-forming couplers can be incorporated in the photographic elements, as illustrated by Schneider et al., **Die Chemie**, Vol. 57, 1944, p.113, and in US Pat. Nos. 2,304,940, 2,269,158, 2,322,027, 2,376,679, 2,801,171, 2,748,141, 2,772,163, 2,835,579, 2,533,514, 2,353,754, 3,409,435 and Chen, Research Disclosure, Vol. 159, July 1977, Item 15930. The dye-forming couplers can be incorporated in different amounts to achieve differing photographic effects. For example, GB Pat. No. 923,045 and US Pat. No. 3,843,369 teach limiting the concentration of coupler in relation to the silver coverage to less than normally employed amounts in faster and intermediate speed emulsion layers.

The dye-forming couplers are commonly chosen to form subtractive primary (i.e., yellow, magenta and cyan) image dyes and are nondiffusible, colorless couplers, such as two and four equivalent couplers of the open chain ketomethylene, pyrazolone, pyrazolotriazole, pyrazolobenzimidazole, phenol and naphthol type hydrophobically ballasted for incorporation in high-boiling organic (coupler) solvents. Such couplers are illustrated in US Pat. Nos. 2,423,730, 2,772,162, 2,895,826, 2,710,803, 2,407,207, 3,737,316, 2,367,531, 2,772,161, 2,600,788, 3,006,759, 3,214,437, 3,253,924, 2,875,057, 2,908,573, 3,043,892, 2,474,293, 2,407,210, 3,062,653, 3,265,506, 3,384,657, 2,343,703, 3,127,269, 2,865,748, 2,933,391, 2,865,751, 3,725,067, 3,758,308, 3,779,763, 3,785,829, 3,762,921, 3,983,608, 3,311,467, 3,408,194, 3,458,315, 3,447,928, 3,476,563, 3,419,390, 3,419,391, 3,519,429, 3,222,176, 3,227,550, in GB Pat. Nos. 969,921, 1,241,069, 1,011,940, 975,928, 1,111,554, 1,248,924, and in CA Pat. No. 726,651. Dye-forming couplers of differing reaction rates in single or separate layers can be employed to achieve desired effects for specific photographic applications.

The dye-forming couplers upon coupling can release photographically useful fragments, such as development inhibitors or accelerators, bleach accelerators, developing agents, silver halide solvents, toners, hardeners, fogging agents, antifoggants, competing couplers, chemical or spectral sensitizers and desensitizers. Development inhibitor-releasing (DIR) couplers are illustrated in US Pat. Nos. 3,148,062, 3,227,554, 3,733,201, 3,617,291, 3,703,375, 3,615,506, 3,265,506, 3,620,745, 3,632,345, 3,869,291, 3,642,485, 3,770,436, 3,808,945, and in GB Pat. Nos. 1,201,110 and 1,236,767. Dye-forming couplers and nondye-forming compounds which upon coupling release a variety of photographically useful groups are described in US Pat. No. 4,248,962. DIR compounds which do not form dye upon reaction with oxidized color developing agents can be employed, as illustrated in US Pat. Nos. 3,928,041, 3,958,993, 3,961,959, 4,049,455, 4,052,213 and in German OLS Nos. 2,529,350, 2,448,063 and 2,610,546. DIR compounds with oxidatively cleave can be employed, as illustrated in US Pat. Nos. 3,379,529, 3,043,690, 3,364,022, 3,297,445 and 3,287,129. Silver halide emulsions which are relatively light insensitive, such as Lipmann emulsions, having been used as interlayers or overcoat layers to prevent or control the migration of development inhibitor fragments as described in US Pat. No. 3,892,572.

The photographic elements can incorporate colored dye-forming couplers, such as those employed to form integral masks for negative color images, as illustrated in US Pat. Nos. 2,449,966, 2,521,908, 3,034,892, 3,476,563, 3,519,429, 2,543,691, 3,028,238, 3,061,432, and/or competing couplers, as illustrated in US Pat. Nos. 3,876,428, 3,580,722, 2,998,314, 2,808,329, 2,742,832 and 2,689,793.

As previously noted, the color provided in the image produced by exposure of each of the differently sensitized silver halide emulsion layers does not have to be produced by color coupler reaction with oxidized color developers. A number of other color image forming mechanisms well known in the art can also be used. Amongst the commercially available color image forming mechanisms are the diffusion transfer of dyes, dye-bleaching, and leuco dye oxidation. Each of these procedures is used in commercial products, is well understood by the ordinary skilled photographic artisan, and is used with silver halide emulsions. Multicolor elements using these different technologies are also commercially available. Converting the existing commercially available systems to the practice of the present invention could be done by routine redesign of the sensitometric parameters of the system and/or the addition of intermediate filter layers as described in US Pat. No. 4,519,892. For example, in a conventional instant color dye-diffusion transfer element, the sensitivity of the various layers and/or the arrangement of filter layers between the silver halide emulsion layers would be directed by the teachings of the above US patent, the element otherwise remaining the same. This would be true with either negative-acting or positive-acting silver halide emulsions in the element. The only major, and fairly apparent, consideration that must be given to such construction is to insure that the placement of any filter layers does not prevent transfer of the diffusion dye to a receptor layer within the element. Using a filter which is not a barrier layer between the receptor layer and the dye-containing layer is the simplest way to address that consideration. Such a layer should not prevent migration of the diffusion dye across the filter layer.

These types of imaging systems are well known in the art. Detailed discussions of various dye transfer, diffusion processes may be found for example in **A fundamentally New Imaging Technology for Instant Photography**, W.T. Harison, Jr., Photographic Science and Engineering, Vol. 20, No. 4, July/August 1976, and Neblette's **Handbook of Photography and Reprography, Materials, Processes and Systems**, 7th Edition, John. M. Stunge, van Nostrand Reinhold Company, N.Y., 1977, pp. 324-330 and 126. Detailed discussion of dye-bleach color imaging systems are found for example in **The Reproduction of Colour**, 3rd Ed., R.W.G. Hunt, Fountain Press, London, England, 1975, pp.325-330; and **The Theory of the Photographic Process**, 4th Ed., Mees and James, Macmillan Publishing Co., Inc., N.Y., 1977, pp. 363-366. Pages 366-372 of Mees and James, supra, also discuss dye-transfer processes in great detail. Leuco dye oxidation in silver halide systems are disclosed in such literature as US Pat. Nos. 4,460,681, 4,374,821, and 4,021,240. Diffusion photothermographic color image forming systems such as those disclosed in GB Pat. Appln. No. 3,100,458 are also useful in the practice of the present invention.

The photographic elements can include image dye stabilizers. Such image dye stabilizers are illustrated in US Pat. Nos. 3,432,300, 3,698,909, 3,574,627, 3,573,050, 3,764,337, and 4,042,394 and in GB Pat. No. 1,326,889.

Filter dyes can be included in the photographic elements. Said dyes must be selected on the basis of their radiation filtering characteristics to insure that they filter the appropriate wavelengths. Filter dyes and their methods of incorporation into the photographic elements are well documented in the literature such as US Pat. Nos. 4,440,852, 3,671,648, 3,423,207, and 2,895,955, GB Pat. No. 485,624, and Research Disclosure, Vol. 176, December 1978, Item 17643. Dyes which will not allow transmission of radiation having wavelengths shorter than the shortest wavelength to which one of the emulsion layers has been sensitized can be used in a layer above one or more (preferably all) of the emulsion layers. The cut-off filter dye preferably does not transmit light more than approximately 50 nm less than the shortest wavelength to which any of the emulsion layers have been sensitized. Filter dyes should also be provided with non-fugitive (i.e., non-migratory) characteristics and should be decolorizable (by bleaching in developer or heat, for example) or leachable (e.g., removed by solvent action of any baths).

Other conventional photographic addenda such as coating aids, antistatic agents, acutance dyes, antihalation dyes and layers, antifoggants, latent image stabilizers, supersensitizers, antikinking agents, high intensity reciprocity failure reducers, and the like may also be present.

The present invention will be now illustrated in greater detail by the following example.

### EXAMPLE

A first dye filter (Dye Filter A) was obtained by coating a biaxially-oriented polyethylene terephthalate film having a thickness of 0.18 mm with the following layers:
a) a first gelatin layer comprising gelatin at a dry coating weight of 5.4 g/m² and the dye 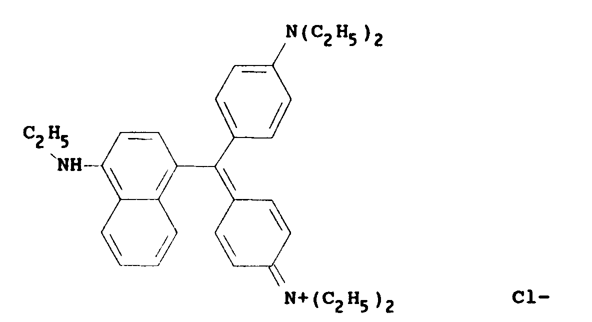 having a λₘₐₓ of 599 nm at a dry coating weight of 0.71 g/m²,
b) a second gelatin layer comprising gelatin at a dry coating weight of 1.4 g/m², and
c) a third gelatin layer comprising gelatin at a dry coating weight of 5 g/m², the dye 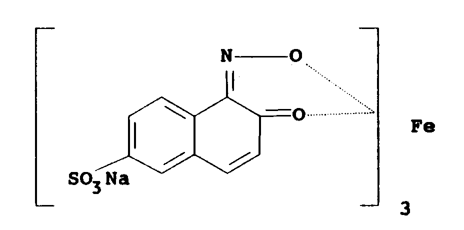 having a λₘₐₓ at 714 nm at a dry coating weight of 0.778 g/m², and the dye 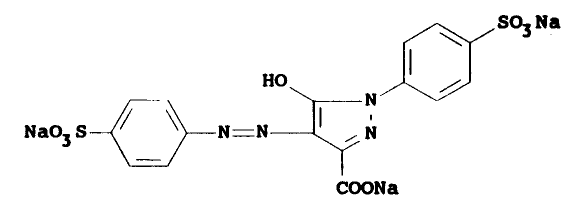 having a λₘₐₓ at 425 nm at a dry coating weight of 1.065 g/m².

A second dye filter (Dye Filter B) was obtained by coating a biaxially-oriented polyethylene terephthalate film having a thickness of 0.18 mm with a gelatin layer comprising gelatin at a dry coating weight of 3.57 g/m², the dye 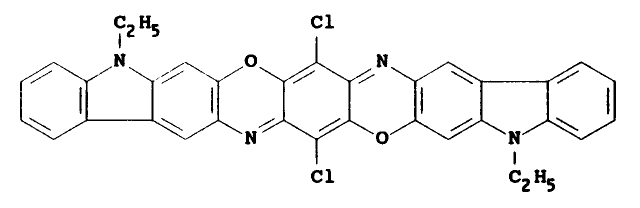
having λₘₐₓ at 530 and 560 nm at a dry coating weight of 0.011 g/m², and the dye 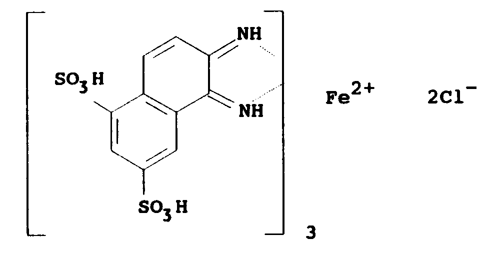
having a λₘₐₓ at 710 nm at a dry coating weight of 0.64 g/m².

A first safelight filter (Filter 1) was obtained by superimposing one sheet of Dye Filter A with five sheets of Dye Filter B. Filter 1 absorbs visible light up to a wavelength of about 470 nm and visible light and infrared radiation over the wavelength range of from about 530 to about 850 nm but transmits light in the wavelength range of from about 470 to about 530 nm.

A second safelight filter (Filter 2) was obtained by placing Filter 1 in contact with a Schott Glass type KG3. The latter is heat-absorbing infrared opaque colored glass highly transmissive in the visible range and practically opaque to infrared radiation.

A third safelight filter (Filter 3) was obtained by placing Filter 1 in contact with a 3M Scotchtint™ Window Film P19. The latter is a thin coating of vapor deposited aluminum on a transparent polyethylene terephthalate film which allows transmission of the visible portion of the spectrum (380 to 760 nm) and blocks the near infrared (760 to 1500 nm).

The filters were used in the handling and processing of an infrared sensitive multilayer color photographic element having coated, in the order, the following layers on a polyethylene coated paper support which has been previously subbed with gelatin:
**Layer 1:** A gelatin layer comprising a sulfur and gold sensitized silver bromochloride emulsion sensitized to 820 nm and a magenta color-forming coupler.
**Layer 2:** A gelatin interlayer.
**Layer 3:** A gelatin layer comprising a sulfur and gold sensitized silver bromochloride emulsion sensitized to 780 nm and a yellow color-forming coupler.
**Layer 4:** A gelatin interlayer containing an oxidized developer scavenger.
**Layer 5:** A gelatin layer comprising a sulfur and gold sensitized silver bromochloride emulsion sensitized to 880 nm and a cyan color-forming coupler.
**Layer 6:** A gelatin interlayer.
**Layer 7:** A gelatin protective overcoat layer containing a gelatin hardener.

The American National Standard Method ANSI^{R} PH2.22-1978 for determining the maximum length of time a given sensitized material can be subjected to darkroom safelight illumination of a particular quality and illuminance without affecting the quality of the final record was used to measure the level of fogging due to safelight lighting when using the infrared sensitive element with safelight lighting. Safety time was evaluated for a luminous flux density of 10 x 10⁻³ lux using an Osram Dulux^{R} EL 7W cold-light lamp covered with the infrared safelight filter under evaluation. The Filter 3 had the infrared reflective layer placed nearer to the lamp.

The exposed multilayer element was processed through a standard Kodak EP-2^{R} process and minimum density (fog) was measured for each color record.

The following Table 1 reports the minimum density for each color record measured at various times (in minutes) of exposure to safelight lighting. Values are reported as increase of minimum density versus minimum density at no exposure taken as zero.

**Table 1**

| **Filter** | **Minimum Density** | | | | | | | | | | | |
|---|---|---|---|---|---|---|---|---|---|---|---|---|
| | **yellow** | | | | **Magenta** | | | | **Cyan** | | | |
| | **0′** | **2′** | **5′** | **10′** | **0′** | **2′** | **5′** | **10′** | **0′** | **2′** | **5′** | **10′** |
| 1 cmp. | 0 | 0 | 0.03 | 0.11 | 0 | 0 | 0.07 | 0.21 | 0 | 0.01 | 0.09 | 0.20 |
| 2 cmp | 0 | 0 | 0 | 0 | 0 | 0 | 0 | 0 | 0 | 0 | 0 | 0 |
| 3 inv. | 0 | 0 | 0.01 | 0.01 | 0 | 0 | 0.01 | 0.01 | 0 | 0 | 0.01 | 0.01 |

Exposure of the infrared sensitive multilayer element was continued with Filters 2 and 3 over 10 minutes. The following Table 2 reports the minimum density for each color record measured at times over 10 minutes.

**Table 2**

| **Filter** | **Minimum Density** | | | | | | | | |
|---|---|---|---|---|---|---|---|---|---|
| | **Yellow** | | | **Magenta** | | | **Cyan** | | |
| | **20′** | **30′** | **40′** | **20′** | **30′** | **40′** | **20′** | **30′** | **40′** |
| 2 cmp. | 0.01 | 0.03 | 0.06 | 0.01 | 0.01 | 0.03 | 0 | 0 | 0.01 |
| 3 inv. | 0.01 | 0.01 | 0.01 | 0.01 | 0.02 | 0.03 | 0 | 0 | 0.02 |

The filter of the present invention effectively extends protection of the infrared sensitive photographic element to the safelight lighting required for handling and processing the element. Compared with the filter employing an infrared absorbing glass, the safelight filter of the present invention has the advantages of lower cost, better mechanical characteristics (thickness and brittleness) and flexibility which allows the safelight filter to be wrapped around cold-light tubular lamps used in handling and processing infrared sensitive elements.

## Claims

1. A safelight filter for infrared-sensitive silver halide photographic elements, said safelight filter comprising in superimposition a dye filter layer which absorbs visible light up to a wavelength of about 470 nm, a dye filter layer which absorbs visible light and infrared radiation over the wavelength range of from about 530 to about 850 nm and a flexible, transparent reflective sheet material having on one surface thereof a visible light transparent metal coating which reduces transmission of near infrared radiation.

2. The safelight filter of claim 1 which transmits green light in the wavelength range of from about 470 nm to about 530 nm.

3. The safelight filter according to claim 1 wherein the dye filter which absorbs visible light up to a wavelength of about 470 nm comprises a colloid layer containing yellow dyes.

4. The safelight filter according to claim 1 wherein the dye filter which absorbs visible light and infrared radiation over the wavelength range of from about 530 to about 850 nm comprises a colloid layer containing green, blue and red-violet dyes in combination.

5. The safelight filter according to claim 1 wherein the flexible, visible light transparent sheet material which reduces transmission of near infrared radiation comprises a transparent reflective vapor-deposited aluminum layer.

6. The safelight filter according to claim 5 wherein said transparent reflective vapor-deposited aluminum layer has a thickness in the range of from 100 to 2000 Angstrom.

7. The safelight filter according to claim 5 which comprises a transparent water-insoluble protective layer coated over the vapor-deposited aluminum layer.
